# EUROPEAN PATENT APPLICATION

(11) **EP 4 624 730 A1**
(43) Date of publication of application: **01.10.2025**
(21) Application number: 24223585.1
(22) Date of filing: 29.12.2024
(51) Int. Cl.: F01N 3/20, B01J 35/61, C04B 35/565, C04B 38/00, F01N 3/28

(54) **ELECTRICALLY HEATING SUPPORT**

(30) Priority: 27.03.2024 JP 2024052086
(71) Applicant: NGK Insulators, Ltd., Nagoya-shi, Aichi 467-8530 (JP)
(72) Inventor: OKAMOTO, Naoki, Nagoya-shi, Aichi, 467-8530 (JP); MIZOGUCHI, Takashi, Nagoya-shi, Aichi, 467-8530 (JP); INOUE, Takayuki, Nagoya-shi, Aichi, 467-8530 (JP)
(74) Representative: MERH-IP Matias Erny Reichl Hoffmann Patentanwälte PartG mbB

(57) **Abstract**

An electrically heating support includes: a honeycomb structure 1 including a honeycomb structure portion 10 having an outer peripheral wall 100 and a partition wall 101 disposed on an inner side of the outer peripheral wall 100, the partition wall 101 defining a plurality of cells 102 each extending from one end face to other end face to form a flow path; and a pair of electrodes for applying a voltage to the honeycomb structure 1. The outer peripheral wall 100 and the partition wall 101 are made of a ceramic porous body, and the ceramic porous body has a specific surface area of 0.01 m²/g or more and 0.20 m²/g or less.

## Description

### Technical field

The present invention relates to an electrically heating support.

### State of the art

In general, electrically heating catalysts (EHCs) are known. The EHCs are for purifying an exhaust gas emitted when an internal combustion engine is in a cold state immediately after the internal combustion engine is started, by arranging electrodes on a honeycomb structure made of conductive ceramics, and heating the honeycomb structure itself by electrical conduction to increase a temperature of a catalyst supported on the honeycomb structure to its activation temperature before starting the engine.

The electrically heating support employs power sources with various voltages. Therefore, the resistance value of the electrically heating support should be adjusted to a predetermined value in order to match the voltage used. However, deterioration of the electrically heating support in a high-temperature environment interrupts the conductive path to increase the resistance, so that the temperature cannot be increased to a target temperature within a predetermined period of time. The interruption of the conductive path would be caused by the conductive path coming into contact with the air in the high-temperature environment, thereby causing an oxide film to grow on the surface of the conductive path to narrow the conductive path.

Patent Literature 1 teaches that a temperature and a time for a heat treatment of a honeycomb structure is controlled to adjust a thickness of an oxide film formed on a surface of a silicon ceramic making up an outer peripheral wall and a partition wall, in order to achieve a honeycomb structure having an improved balance between oxidation resistance and thermal shock resistance in a high-temperature environment.

### Citation list

### Patent Literature

[Patent Literature 1] Japanese Patent Application Publication No. 2012-145495 A

### Summary of the invention

Although Patent Literature 1 described above adjusts the thickness of the oxide film, there is still room for improvement in an increasing rate of resistance of the electrically heating support.

The present invention has been made to solve the problems as described above. One of objects of the present invention is to provide an electrically heating support capable of slowing down the increasing rate of resistance of the electrically heating support.

### Aspect 1.

In an embodiment, the present invention relates to an electrically heating support, comprising: a honeycomb structure including a honeycomb structure portion having an outer peripheral wall and a partition wall disposed on an inner side of the outer peripheral wall, the partition wall defining a plurality of cells each extending from one end face to other end face to form a flow path; and a pair of electrodes for applying a voltage to the honeycomb structure, wherein the outer peripheral wall and the partition wall are made of a ceramic porous body, and the ceramic porous body has a specific surface area of 0.01 m²/g or more and 0.20 m²/g or less.

### Aspect 2.

The present invention may relate to the electrically heating support according to aspect 1, wherein the ceramic porous body is a composite material of silicon metal and silicon carbide, and a volume ratio of the silicon metal in the ceramic porous body is 18 vol % or more.

### Aspect 3.

The present invention may relate to the electrically heating support according to aspect 1 or 2, wherein the ceramic porous body has a bulk density of 2.7 g/cm³ or less.

### Aspect 4.

The present invention may relate to the electrically heating support according to any one of aspects 1 to 3, wherein the specific surface area of the ceramic porous body is 0.05 m²/g or more and 0.16 m²/g or less.

### Aspect 5.

The present invention may relate to the electrically heating support according to any one of aspects 1 to 4, wherein the specific surface area of the ceramic porous body is 0.08 m²/g or more and 0.14 m²/g or less.

According to an embodiment of the electrically heating support of the present invention, the ceramic porous body has a specific surface area of 0.20 m²/g or less, so that the area of the ceramic porous body exposed to the air can be reduced, and the region of the ceramic porous body that is oxidized can be reduced. This can achieve a slow increasing rate of the resistance of the electrically heating support. Further, if the ceramic porous body becomes too dense, the weight of the honeycomb structure increases, and the time required to heat the honeycomb structure to a predetermined temperature (heating time) tends to become longer. However, according to the present invention, the ceramic porous body has a specific surface area of 0.01 m²/g or more, so that the heating time can be prevented from becoming longer.

### Brief description of the drawings

FIG. 1 is a perspective view showing a honeycomb structure included in an electrically heating support according to an embodiment of the present invention;
FIG. 2 is an explanatory view showing a state where electrodes are attached to the honeycomb structure in FIG. 1;
FIG. 3 is an explanatory view showing a conductive path in a honeycomb structure portion;
FIG. 4 is an explanatory view showing a state where the conductive path in FIG. 3 is narrowed by an oxide film;
FIG. 5 is an explanatory view showing a ceramic porous body making up the outer peripheral wall and the partition wall of the honeycomb structure portion in FIG. 1; and
FIG. 6 is an explanatory view showing a ceramic porous body having a smaller specific surface area than the embodiment in FIG. 5.

### Detailed description of the invention

Hereinafter, embodiments for carrying out the present invention will be described with reference to the drawings. The present invention is not limited to each embodiment, and components can be modified and embodied without departing from the spirit of the present invention. Further, various inventions can be formed by appropriately combining a plurality of components disclosed in each embodiment. For example, some components may be removed from all of the components shown in the embodiments. Furthermore, the components of different embodiments may be optionally combined.

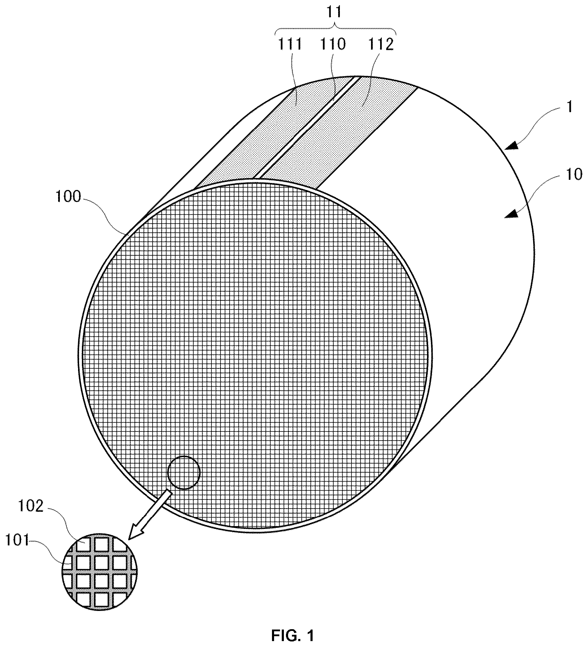

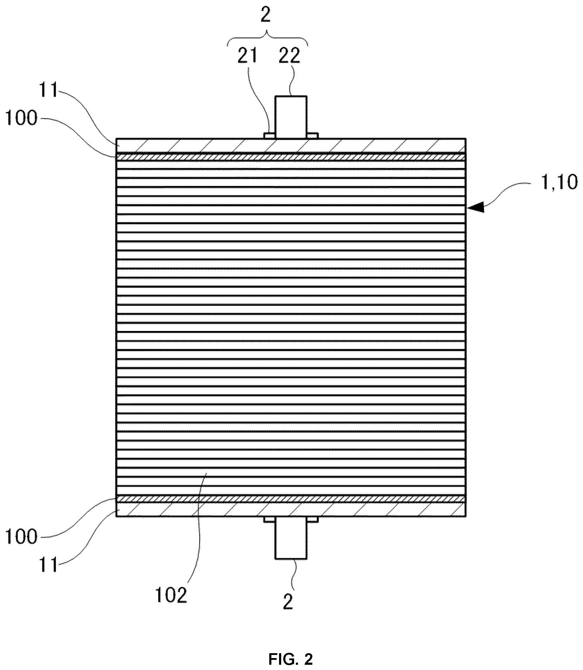

FIG. 1 is a perspective view showing a honeycomb structure 1 included in an electrically heating support according to an embodiment of the present invention, and FIG. 2 is an explanatory view showing a state where electrodes 2 are attached to the honeycomb structure 1 in FIG. 1.

The electrically heating support according to the embodiment of the present invention has a honeycomb structure 1 and a pair of electrodes 2 (see FIG. 2) for applying a voltage to the honeycomb structure 1.

As shown in FIG. 1, the honeycomb structure 1 has a honeycomb structure portion 10. The honeycomb structure portion 10 includes: an outer peripheral wall 100; and a partition wall 101 which is arranged on an inner side of the outer peripheral wall 100 and defines a plurality of cells 102 each extending from one end face to other end face to form a flow path. The honeycomb structure portion 10 may be a member having a pillar shape. The pillar shape is understandable as a three-dimensional shape having a thickness in an extending direction of the cells 102 (an axial direction of the honeycomb structure portion 10). A ratio of an axial length of the honeycomb structure portion 10 to a diameter or width of the end face of the honeycomb structure portion 10 (aspect ratio) is arbitrary. The pillar shape may also include a shape in which the axial length of the honeycomb structure portion 10 is shorter than the diameter or width of the end face (flat shape).

An outer shape of the honeycomb structure portion 10 is not particularly limited as long as it has a pillar shape. For example, it can be other shapes such as a pillar shape having circular end faces (cylindrical shape), a pillar shape having oval end faces, and a pillar shape having polygonal (rectangular, pentagonal, hexagonal, heptagonal, octagonal, etc.) end faces. As for the size of the honeycomb structure portion 10, an area of the end faces is preferably from 2,000 to 65,000 mm², and even more preferably from 5,000 to 25,000 mm², in order to increase heat resistance (to suppress cracks generated in the circumferential direction of the outer peripheral wall 100). A plurality of pillar shaped honeycomb structures each having polygonal end faces can also be joined together for use.

A shape of each cell 102 in the cross section perpendicular to the extending direction of the cells 102 may preferably be a quadrangle, hexagon, octagon, or a combination thereof, although not limited thereto. Among these, the quadrangle and the hexagon are preferred. Such a cell shape can lead to a decreased pressure loss when an exhaust gas flows through the honeycomb structure portion 10, which can provide improved purification performance.

The partition wall 101 that defines the cells 102 preferably has a thickness of from 0.1 to 0.8 mm, and more preferably from 0.1 to 0.6 mm. The thickness of 0.1 mm or more of the partition wall 101 can suppress a decrease in the strength of the honeycomb structure portion 10. The thickness of the partition wall 101 of 0.8 mm or less can suppress a larger pressure loss when an exhaust gas flows through the honeycomb structure portion 10 if the honeycomb structure portion 10 is used as a catalyst support to support a catalyst. In the present invention, the thickness of the partition wall 101 is defined as a length of a portion passing through the partition wall 101, among line segments connecting the centers of gravity of adjacent cells 102, in the cross section perpendicular to the extending direction of the cells 102.

The honeycomb structure portion 10 preferably has a cell density of from 4 to 150 cells/cm², and more preferably from 7 to 100 cells/cm², in the cross section perpendicular to the extending direction of the cells 102. The cell density in such a range can allow the purification performance of the catalyst to be increased while reducing the pressure loss when the exhaust gas flows. The cell density of 4 cells/cm² or more can allow a catalyst supported area to be sufficiently ensured. The cell density of 150 cells/cm² or less can prevent the pressure loss when the exhaust gas flows through the honeycomb structure portion 10 from being increased if the honeycomb structure portion 10 is used as a catalyst support to support the catalyst. The cell density is a value obtained by dividing the number of cells by the area of one end face portion of the honeycomb structure portion 10 excluding the outer peripheral wall 100 portion.

The provision of the outer peripheral wall 100 of the honeycomb structure portion 10 is useful from the viewpoints of ensuring the structural strength of the honeycomb structure portion 10 and suppressing the leakage of a fluid flowing through the cells 102 from the outer peripheral wall 100. Specifically, the thickness of the outer peripheral wall 100 is preferably 0.05 mm or more, and more preferably 0.10 mm or more, and even more preferably 0.15 mm or more. However, if the outer peripheral wall 100 is too thick, the strength will be too high, and a strength balance between the outer peripheral wall 100 and the partition wall 101 will be lost, resulting in a decrease in thermal shock resistance. Therefore, the thickness of the outer peripheral wall 100 is preferably 1.0 mm or less, and more preferably 0.7 mm or less, and even more preferably 0.5 mm or less. The thickness of the outer peripheral wall 100 is defined as a thickness of the outer peripheral wall 100 in the normal line direction relative to the tangent line at a measured point when the point of the outer peripheral wall 100 where the thickness is to be measured is observed in the cross section perpendicular to the extending direction of the cells 102.

The honeycomb structure portion 10 is formed of an electrically conductive material and heated by electrical conduction. The honeycomb structure 10 may be made of an electrically conductive ceramic material. Volume resistivity is not particularly limited as long as the honeycomb structure portion 10 is capable of heat generation by Joule heat when a current is applied. Preferably, the volume resistivity is equal to or more than 0.1 Ωcm and equal to or less than 200 Ωcm, and more preferably equal to or more than 1 Ωcm and equal to or less than 200 Ωcm. As used herein, the volume resistivity of the honeycomb structure portion 10 refers to a value measured at 25 °C by the four-terminal method.

When the honeycomb structure portion 10 is the ceramic, the electrically conductive material of the honeycomb structure 10 can be selected from the group consisting of oxide ceramics such as alumina, mullite, zirconia and cordierite, and non-oxide ceramics such as silicon carbide, silicon nitride and aluminum nitride, although not limited thereto. Further, silicon carbide-silicon composite materials and silicon carbide/graphite composite materials can also be used. Among these, it is preferable that the electrically conductive material of the honeycomb structure portion 10 contains ceramics mainly based on a silicon metal-silicon carbide composite material or silicon carbide, in terms of balancing heat resistance and electrical conductivity. The phrase "the material of the honeycomb structure portion 10 is mainly based on a silicon metal-silicon carbide composite material" means that the honeycomb structure portion 10 contains 90% by mass of more of silicon metal-silicon carbide composite material (total mass) based on the total material. Here, the silicon metal-silicon carbide composite material contains silicon carbide particles as an aggregate and silicon metal as a binding material to bind the silicon carbide particles, preferably in which a plurality of silicon carbide particles are bound by the silicon metal such that pores are formed between the silicon carbide particles. The phrase "the electrically conductive material of the honeycomb structure portion 10 is mainly based on silicon carbide" means that the honeycomb structure portion 10 contains 90% or more of silicon carbide (total mass) based on the total material.

When the honeycomb structure portion 10 contains the silicon metal-silicon carbide composite material, a ratio of the "mass of silicon metal as a binding material" contained in the honeycomb structure portion 10 to the total of the "mass of silicon carbide particles as an aggregate" contained in the honeycomb structure portion 10 and the "mass of silicon metal as a binding material" contained in the honeycomb structure portion 10 is preferably from 10 to 40% by mass, and more preferably from 15 to 35% by mass.

The outer peripheral wall 100 and partition wall 101 may be porous. When they are porous, the porosity of each of the outer peripheral wall 100 and the partition wall 101 is preferably from 35 to 60%, and even more preferably from 35 to 45%. The porosity is a value measured by a mercury porosimeter. Alternatively, the outer peripheral wall 100 and the partition wall 101 may be dense. When they are dense, the porosity of each of the outer peripheral wall 100 and the partition wall 101 may be 10% or less, or 5% or less.

Each of the outer peripheral wall 100 and the partition wall 101 of the honeycomb structure portion 10 preferably has an average pore diameter of from 2 to 15 µm, and even more preferably from 4 to 8 µm. The average pore diameter is a value measured by a mercury porosimeter.

The honeycomb structure 1 may have at least one electrode layer 11 provided on the outer surface of the outer peripheral wall 100. The electrode layer 11 may extend from one end to the other end of the honeycomb structure portion 10 in the extending direction of the cells 102. The electrode layer 11 may form the outer peripheral surface of the honeycomb structure 1 together with the outer peripheral wall 100.

Although one electrode layer 11 may be provided on the entire outer peripheral surface of the honeycomb structure 1, in the embodiment, a pair of electrode layers 11 are provided to be spaced apart from each other in the circumferential direction of the honeycomb structure portion 10 to extend in a band shape in the extending direction of the cells 102. In a cross section of the honeycomb structure portion 10 orthogonal to the extending direction of the cells 102, one of the pair of electrode layers 11 is disposed on the opposite side of the other of the pair of electrode layers 11 across the center of the honeycomb structure portion 10. In FIG. 1, only one of the pair of electrode layers 11 is shown. In the cross section orthogonal to the extending direction of the cells 102, 0.5 times the central angle of each electrode layer 11 may be 15 to 89°. The central angle of the electrode layer 11 may be an angle formed by two line segments connecting both ends of the electrode layer 11 to the center of the honeycomb structure portion 10 in the cross section of the honeycomb structure portion 10 orthogonal to the extending direction of the cells 102. When the honeycomb structure portion 10 is cylindrical, that angle may be an interior angle of a sector formed by the two line segments and the electrode layer 11.

The electrode layer 11 preferably has a thickness of 0.01 to 5 mm, and more preferably 0.01 to 3 mm. Such a thickness within such a range can lead to uniform heat generation. If the thickness of the electrode layer 11 is less than 0.01 mm, the electrical resistance may be higher and heat may not be uniformly generated. If the thickness is more than 5 mm, breakage may occur during canning. If the electrode layer 11 is too thin, the effect of adjusting the outer diameter when varying the outer diameter of the honeycomb structure 1 in the extending direction of the cells 102 due to the variation in the thickness of the electrode layer 11 becomes weak, as described below, and if the electrode layer 11 is too thick, the holding force of the part that does not have the electrode layer 11 does not work, and the electrode layer 11 tends to fall off during a vibration test. If the electrode layer 11 is too thin, the resistance value of the electrode layer 11 is not sufficient, and current easily flows through the base material (honeycomb structure portion 10), which will cause the heat generation distribution to become unstable, leading to a decrease in purification performance and damage to the base material. On the other hand, if the electrode layer 11 is too thick, a current will easily flow through the electrode layer 11 and the electrode layer 11 will easily generate heat, which will cause the heat distribution to become unstable, leading to a decrease in purification performance and damage to the substrate.

The pair of electrode layers 11 according to the present embodiment each has a separation band 110 and a first partial electrode layer 111 and a second partial electrode layer 112 separated by the separation band 110. The separation band 110 may be a slit provided between the first partial electrode layer 111 and the second partial electrode layer 112. The slit may be filled with a material having a higher volume resistivity than the first partial electrode layer 111 and the second partial electrode layer 112. Each of the first partial electrode layer 111 and the second partial electrode layer 112 has a strip shape having a predetermined width in the circumferential direction of the honeycomb structure portion 10, and the separation band 110 has a line shape that is narrower than the first partial electrode layer 111 and the second partial electrode layer 112. However, the arrangement method of the separation band 110 and the first partial electrode layer 111 and the second partial electrode layer 112 is not limited to this embodiment as long as they can be connected to the electrodes 2.

As shown in FIG. 2, the pair of electrodes 2 may be attached onto the outer peripheral surface of the honeycomb structure 1. More specifically, the electrodes 2 may be fixed on the electrode layers 11. The electrodes 2 may be made of a metal. The metal electrodes 2 can be connected to an external power source such as a battery via a power cable. By applying a voltage to the honeycomb structure 1 through the metal electrodes 2, the honeycomb structure 1 can generate heat. This can increase the temperature of the catalyst supported on the honeycomb structure 1 to an activation temperature before the engine is started.

Each electrode 2 may have a connection portion 21 disposed on the outer peripheral surface (on the electrode layer 11) of the honeycomb structure 1, and a drawer portion 22 led out from the connection portion 21. Although not shown in detail, the connection portion 21 may be configured in a comb shape having a plurality of teeth portions, and some of the teeth portions may be connected to the first partial electrode layer 111 (see FIG. 1), and the other teeth portions may be connected to the second partial electrode layer 112 (see FIG. 1). The connection portion 21 may be formed in an arc shape along the outer peripheral surface of the honeycomb structure 1. The drawer portion 22 may be erected from one end of the connection portion 21, and a power cable may be connected to the drawer portion 22.

From the viewpoint of allowing electricity to flow through the electrode layers 11 easily, each electrode layer 11 preferably has a volume resistivity of 1/200 or more and 1/10 or less of that of the honeycomb structure portion 10.

The material of each electrode layer 11 may be a conductive ceramic, a metal, or a composite material (cermet) of a metal and a conductive ceramic. Examples of the metal include an elemental metal such as Cr, Fe, Co, Ni, Si, or Ti, or an alloy containing at least one metal selected from the group consisting of those metals. Examples of the conductive ceramic include, but are not limited to, silicon carbide (SiC), and metal compounds such as metal silicides including tantalum silicide (TaSi₂) and chromium silicide (CrSi₂).

For the method for producing the honeycomb structure 1 having the electrode layer 11, first, an electrode layer forming raw material containing a ceramic raw material is applied to a side surface of a honeycomb dried body, and then dried to form a pair of unfired electrode layers each extending in a band shape in the extending direction of the cells 102 on the outer surface of the outer peripheral wall 100, across the central axis of the honeycomb dried body, thereby producing a honeycomb dried body with unfired electrode layers. The honeycomb dried body with the unfired electrode layers is then fired to produce a honeycomb fired body having a pair of electrode layers 11. Thus, the honeycomb structure 1 having the electrode layers 11 is obtained.

By supporting a catalyst on the honeycomb structure portion 10, the electrically heating support can be used as a catalyst body. Examples of the catalyst include noble metal-based catalysts and catalysts other than those. Illustrative examples of the noble metal catalysts include three-way catalysts and oxidation catalysts having a noble metal such as platinum (Pt), palladium (Pd), and rhodium (Rh) supported on surfaces of alumina pores, and containing a co-catalyst such as ceria and zirconia; or lean NOx trap catalysts (LNT catalysts) containing an alkaline earth metal and platinum as storage components for nitrogen oxides (NOx). Examples of catalysts that do not use noble metals include NOx catalytic reduction catalysts (SCR catalysts) containing copper-substituted or iron-substituted zeolites, and the like. Further, two or more types of catalysts selected from those catalysts may be used. A method of supporting the catalyst is also not particularly limited, and it can be carried out according to the conventional method of supporting the catalyst on the honeycomb structure.

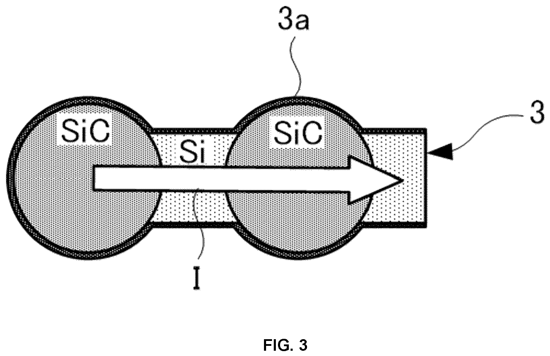

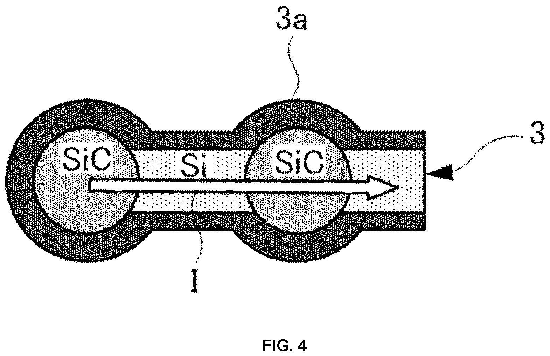

Next, FIG. 3 is an explanatory view showing a conductive path 3 in the honeycomb structure portion 10, and FIG. 4 is an explanatory view showing a state where the conductive path 3 in FIG. 3 are narrowed by an oxide film 3a. FIGS. 3 and 4 show, as an example, an embodiment in which the outer peripheral wall 100 and the partition wall 101 of the honeycomb structure portion 10 are made of a composite material of silicon metal (Si)-silicon carbide (SiC).

As shown in FIGS. 3 and 4, the silicon metal-silicon carbide composite contains silicon carbide particles as an aggregate and silicon metal as a binding material for binding the silicon carbide particles. When a current I is applied to the honeycomb structure portion 10, the current I flows through the conductive path 3 formed by the silicon carbide particles and the silicon metal.

As shown in FIG. 3, even in the initial state of the honeycomb structure 1, the oxide film 3a is formed on the surface of the conductive path 3. When the honeycomb structure 1 is exposed to a high-temperature environment during use, the oxide film 3a grows from the surface of the conductive path 3 toward the interior, as shown in FIG. 4. The electrical resistivity of the oxide film 3a is higher than that of the conductive path 3 formed by the silicon carbide particles and the silicon metal. Therefore, when the oxide film 3a grows and the conductive path 3 becomes narrower, as shown in FIG. 4, the resistance value of the conductive path 3 increases and the current I flowing through the conductive path 3 becomes smaller. When the current I becomes smaller, an amount of heat generated by the honeycomb structure portion 10 decreases.

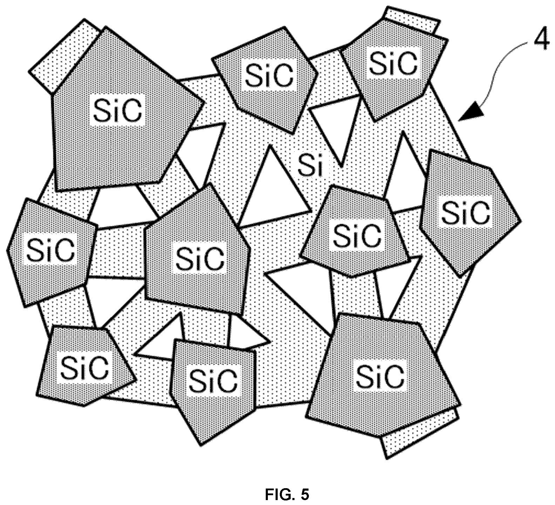

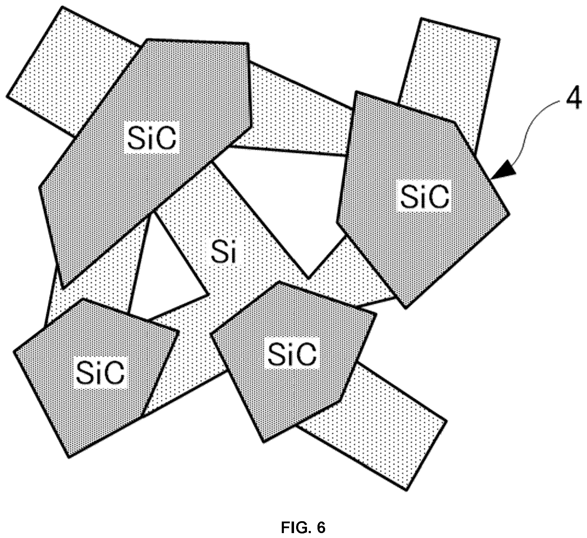

Next, FIG. 5 is an explanatory view showing a ceramic porous body 4 making up the outer peripheral wall 100 and the partition wall 101 of the honeycomb structure portion 10 in FIG. 1, and FIG. 6 is an explanatory view showing the ceramic porous body 4 having a smaller specific surface area than the embodiment in FIG. 5.

The outer peripheral wall 100 and the partition wall 101 of the honeycomb structure portion 10 according to the present embodiment are formed of the porous ceramic body 4. In the honeycomb structure 1 according to the present embodiment, the porous ceramic body 4 has a specific surface area of 0.01 m²/g or more and 0.20 m²/g or less.

As shown in FIG. 5, when the specific surface area of the ceramic porous body 4 is relatively large, the area of the ceramic porous body 4 in contact with the air is relatively large, the region where the ceramic porous body 4 is oxidized (the region where the oxide film 3a shown in FIGS. 3 and 4 is formed) is wider, and an increasing rate of resistance (an increasing rate of a resistance value over time) due to the growth of the oxide film 3a is larger. On the other hand, as shown in FIG. 6, when the specific surface area of the ceramic porous body 4 is relatively small, the area of the ceramic porous body 4 in contact with the air can be relatively small, the region where the ceramic porous body 4 is oxidized (the region where the oxide film 3a shown in FIGS. 3 and 4 is formed) can be narrowed, and the increasing rate of resistance due to the growth of the oxide film 3a can be suppressed. As a result of various studies, the present inventors have found that by setting the specific surface area of the ceramic porous body 4 to 0.20 m²/g or less as described above, the area of the ceramic porous body 4 in contact with the air can be reduced, the region where the ceramic porous body 4 is oxidized can be reduced, and the increasing rate of resistance of the electrically heating support can be made slower.

On the other hand, if the ceramic porous body 4 becomes too dense, that is, if the specific surface area of the ceramic porous body 4 is too small, the weight of the honeycomb structure 1 increases, and the time required for heating the honeycomb structure 1 to a predetermined temperature (heating time) tends to become longer. As a result of extensive investigations, the present inventors have found that the heating time can be prevented from becoming longer by setting the specific surface area of the ceramic porous body 4 to 0.01 m²/g or more.

The specific surface area of the ceramic porous body 4 may be a value measured by a mercury porosimeter. More specifically, when a plurality of samples are taken from the center of the partition wall 101 in the honeycomb structure portion 10 of the electrically heating support so as to have a weight of 0.80 ± 0.03 g, and the specific surface areas of the samples are measured using a mercury porosimeter in accordance with JIS R 1655: 2003, it may be understandable that if an average value of the specific surface areas is 0.01 m²/g or more and 0.20 m²/g or less, the ceramic porous body 4 of the electrically heating support has a specific surface area of 0.01 m²/g or more and 0.20 m²/g or less. The specific surface area may be the average value of the values measured from two samples.

It should be noted that the specific surface area of the ceramic porous body 4 can be adjusted by an amount of a pore former contained in the material of the honeycomb structure 1. The pore former can intentionally form pores to increase the specific surface area. When the total mass of the silicon carbide powder and the metal silicon powder is 100%, the content of the pore former may be adjusted in the range of 0% to 10%.

It is preferable that the specific surface area of the ceramic porous body 4 is 0.05 m²/g or more and 0.16 m²/g or less. The specific surface area of the ceramic porous body 4 of 0.16 m²/g or less allows the increasing rate of resistance of the electrically heating support to be more reliably made slower. Also, the specific surface area of the ceramic porous body 4 of 0.05 m²/g or more can more reliably prevent the heating time from becoming long.

It is more preferable that the specific surface area of the ceramic porous body 4 is 0.08 m²/g or more and 0.14 m²/g or less. The specific surface area of the ceramic porous body 4 of 0.14 m²/g or less allows the increasing rate of resistance of the electrically heating support to be more reliably made slower. Also, the specific surface area of the ceramic porous body 4 of 0.08 m²/g or more can more reliably prevent the heating time from becoming long.

As shown in FIGS. 5 and 6, the ceramic porous body 4 may be a composite material of silicon metal (Si) and silicon carbide (SiC), and the volume fraction of metal silicon in the ceramic porous body 4 may be 18 vol% or more. By having the volume fraction of the silicon metal of 18 vol% or more, the increasing rate of resistance can be more reliably suppressed. From the viewpoint of more reliably suppressing the increasing rate of resistance, there is no particular upper limit of the volume fraction of the silicon metal, but from the viewpoint of thermal shock resistance, the upper limit of the volume fraction of silicon metal can be 48 vol%.

The volume ratio of the silicon metal in the ceramic porous body 4 may be a numerical value obtained by calculating an area ratio of the silicon metal by SEM image analysis and converting the area ratio into the volume ratio. More specifically, a sample may be taken from the center of the partition wall 101 of the honeycomb structure portion 10 of the electrically heating support, and multiple cross-sectional observation photographs may be taken at magnifications of 500 (for example, the number of cross-sectional observation photographs may be 4). In a region of the actual observation area more than 0.08 mm² (which may be, for example, 0.1 mm × 0.2 mm × 4 = 0.08 mm²) as the observation range, the ratios of the silicon metal and the silicon carbide may be calculated by image processing (binarization processing). When the silicon metal (white color), the silicon carbide (gray color), and the pores (black color) are measured by binarization processing, a threshold value may first be set between the silicon metal and the silicon carbide, and the silicon metal is defined as white and the rest is defined as black, and the area ratio may be measured to obtain an area S1 of the silicon metal. Subsequently, a threshold value is set between the silicon carbide and the pores, metal silicon + silicon carbide is defined as white, and the pores are defined as black, and an area ratio S2 of the pores may be obtained. When the area of the entire honeycomb structure in the SEM image is S, the area S3 of the silicon carbide can be obtained by S - S1 - S2. Using these S1 and S3, the area ratios of the silicon metal and the silicon carbide can be calculated by (S1 / S) × 100 and (S3 / S) × 100, and converted into the volume ratios. When the average value of the measured values from the four images is 18 vol% or more, it may be understandable that the volume ratio of the silicon metal in the ceramic porous body 4 of the electrically heating support is 18 vol% or more. GIMP can be used as the binarization processing software.

When producing the honeycomb structure 1, auxiliary raw materials such as metal silicon powder, silicon carbide powder, and binders are mixed to prepare a forming raw material. At this time, the volume ratio of the silicon metal in the ceramic porous body 4 can be adjusted by controlling the ratio of the silicon metal and the silicon carbide added. The volume ratio of the silicon metal as described above can be obtained by preparing the forming raw material so as to have 10 to 40% by mass of silicon metal relative to the total mass of the silicon carbide and the silicon metal. When producing the honeycomb structure 1 by silicon impregnation-firing, the amount of the silicon metal can also be adjusted by the amount of silicon used during impregnation-firing.

The porous ceramic body 4 may have a bulk density of 2.7 g/cm³ or less. Further, the bulk density of the porous ceramic body 4 of 2.7 g/cm³ or less allows the heating time to be more reliably reduced. From the viewpoint of more reliably reducing the heating time, there is no particular lower limit of the bulk density of the porous ceramic body 4, but from the viewpoint of ensuring the strength of the honeycomb structure 1, the lower limit of the bulk density of the porous ceramic body 4 can be 1.4 g/cm³.

The bulk density of the ceramic porous body 4 may be a value calculated from the bulk density measured by the Archimedes method based on the opening ratio of the honeycomb structure portion 10. More specifically, a sample may be taken from the partition wall 101 of the honeycomb structure portion 10 of the electrically heating support, the bulk density of the sample may be measured according to JIS R 1634: 1998, and the measured bulk density may be divided by the opening ratio to calculate the bulk density of the ceramic porous body 4. For example, when the bulk density of the sample is 3 g/cm³ and the opening ratio of the honeycomb structure portion 10 is 50%, the bulk density of the ceramic porous body 4 is: 3 / 0.5 = 6 g/cm³. When the calculated bulk density is 2.7 g/cm³ or less, it may be understandable that the bulk density of the ceramic porous body 4 of the electrically heating support is 2.7 g/cm³ or less. As used herein, the opening ratio of the honeycomb structure portion 10 is the ratio of the areas of the cells 102 (openings) at the end face of the honeycomb structure portion 10 to the area of the end face of the honeycomb structure portion 10 including the cells 102 (openings), and the thickness of the partition wall 101 can be calculated from the pitch of the cells 102. These thicknesses and pitches may be average values measured at the center of the honeycomb structure portion 10.

The bulk density of the ceramic porous body 4 can be adjusted by controlling the porosity through the content of the pore former, in the same manner as the specific surface area.

While the preferred embodiments of the present invention have been described in detail above with reference to the drawings, the present invention is not limited to such embodiments. It is obvious that a person skilled in the art to which the present invention belongs can arrive at various variations or modifications in the scope of the technical idea recited in the claims, and they are also understood to belong to the technical scope of the present invention.

### Examples

The present invention will be described below in more detail with reference to Examples. The present invention is not limited to these Examples.

The present inventors measured the specific surface area and the bulk density of the ceramic porous body 4, as well as the volume ratio of the silicon metal in the ceramic porous body 4, for multiple electrically heating supports. They also measured the increasing rate of resistance (resistance value after use/initial resistance value) and the heating time for those electrically heating support. The results are shown in Table 1 below.

**[Table 1]**

| | Specific Surface Area (m²/g) | Si Ratio (vol%) | Bulk Density (g/cm³) | Increasing Rate of Resistance (Resistance Value after Use/Initial Resistance Value) | Heating Time (sec) | Comprehensive Evaluation |
|---|---|---|---|---|---|---|
| Ex. 1 | 0.011 | 47.8 | 2.7 | 1.10 | 58 | △ |
| Ex. 2 | 0.019 | 43.9 | 2.7 | 1.12 | 54 | △ |
| Ex. 3 | 0.054 | 29.3 | 2.4 | 1.20 | 50 | ○ |
| Ex. 4 | 0.087 | 23.2 | 1.8 | 1.28 | 48 | ⊚ |
| Ex. 5 | 0.120 | 22.3 | 1.7 | 1.36 | 43 | ⊚ |
| Ex. 6 | 0.131 | 21.5 | 1.7 | 1.38 | 42 | ⊚ |
| Ex. 7 | 0.155 | 19.9 | 1.6 | 1.44 | 39 | ○ |
| Ex. 8 | 0.196 | 18.5 | 1.4 | 1.54 | 36 | △ |
| Comp. 1 | 0.008 | 52.4 | 2.8 | 1.09 | 63 | × |
| Comp. 2 | 0.251 | 17.0 | 1.2 | 1.67 | 35 | × |

The specific surface area of the ceramic porous body 4 was measured by the following method. That is, multiple samples were taken from the center of the partition wall 101 in the honeycomb structure portion 10 of the electrically heating support so as to have a weight of 0.80 ± 0.03 g, and the specific surface areas of the samples were measured using a mercury porosimeter in accordance with JIS R 1655: 2003. The specific surface area was determined as the average value of the values measured from the two samples.

The volume ratio of the silicon metal in the ceramic porous body 4 was measured by the following method. That is, a sample was taken from the center of the partition wall 101 in the honeycomb structure portion 10 of the electrically heating support, and multiple cross-sectional observation photographs were taken at magnifications of 500. At this time, the number of the cross-sectional observation photographs was 4. The observation range was 0.1 mm × 0.2 mm so that the actual observation area exceeded 0.08 mm² (0.1 mm × 0.2 mm × 4 = 0.08 mm²). Then, the ratios of the silicon metal and the silicon carbide were calculated by image processing (binarization processing). In the SEM image, the silicon metal appeared in the white color, the silicon carbide appeared in the gray color, and the pores appeared in the black color. First, a threshold was set between the silicon metal and the silicon carbide, the silicon metal was defined as white and the rest was defined as black, and the area ratio was measured to obtain the area S1 of the silicon metal. A threshold was then set between the silicon carbide and the pores, the silicon metal + the silicon carbide was defined as white, and the pores were defined as black to obtain the area ratio S2 of the pores. When the area of the entire honeycomb structure in the SEM image was S, the area S3 of the silicon carbide was calculated by S - S1 - S2. Using S1 and S3, the area ratios of the silicon metal and the silicon carbide were calculated by (S1 / S) × 100 and (S3 / S) × 100, and were converted to the volume ratios. GIMP was used as the binarization software.

The bulk density of the ceramic porous body 4 was measured by the following method. That is, a sample was taken from the partition wall 101 in the honeycomb structure portion 10 of the electrically heating support, and the bulk density of the sample was measured in accordance with JIS R 1634: 1998. The bulk density of the ceramic porous body 4 was calculated by dividing the measured bulk density by the opening ratio.

A sample was cut out from the honeycomb structure 1, and the volume resistivity R0 was measured as an initial resistance value by a four-terminal method. The measured sample was subjected to a durability test in a water vapor atmosphere at 950°C for 200 hours, and the volume resistivity R200 was measured as a resistance value after use in the same manner using the sample after the durability test. The ratio R200/R0 was calculated as the increasing rate of resistance.

For the heating time of the honeycomb structure 1, a voltage of 3 kW was applied to the honeycomb structure 1, and the time until the input heat quantity reached 120 kJ was measured.

In the "Comprehensive Evaluation" column in Table 1, the "X" (cross) indicates that the increasing rate of resistance is 1.60 or more, or the heating time is 60 sec or more.

The symbols of the triangle, circle and double circle indicate that the increase rate of resistance is less than 1.60 and the heating time is less than 60 sec.

In particular, the triangle indicates that the increasing rate of resistance is 1.50 or more and less than 1.60, or the heating time is 54 sec or more and less than 60 sec.

The circle indicates that the increasing rate of resistance is 1.40 or more and less than 1.50, or the heating time is 50 sec or more and less than 54 sec.

The double circle indicates that the increasing rate of resistance is less than 1.40 and the heating time is less than 50 sec.

Electrically heating supports evaluated as the triangle, circle and double circle are determined to be those satisfying the suitable increasing rate of resistance and the suitable heating time.

As shown in Table 1, in Comparative Example 2 in which the specific surface area was 0.251 m²/g, the increasing rate of resistance was 1.67, whereas in Example 8 in which the specific surface area was 0.196 m²/g, the increasing rate of resistance could be suppressed to 1.54. It was confirmed from these results that by setting the specific surface area of the ceramic porous body 4 to 0.20 m²/g or less, the area of the ceramic porous body 4 in contact with the air could be reduced, the region where the ceramic porous body 4 was oxidized could be reduced, and the increasing rate of resistance of the electrically heating support could be made slower.

Further, in Comparative Example 1 in which the specific surface area was 0.008 m²/g, the heating time was 63 sec, whereas, in Example 1 in which the specific surface area was 0.011 m²/g, the heating time was reduced to 58 sec. It was confirmed from these results that the specific surface area of the ceramic porous body 4 of 0.01 m²/g or more could prevent the heating time from becoming long.

It was confirmed from those results that the specific surface area of the ceramic porous body 4 of 0.01 m²/g or more and 0.20 m²/g or less allowed the increasing rate of resistance and the heating time of the electrically heating support to be maintained in the preferable ranges.

Looking at Examples 1 to 8 from a different perspective, it was found that in Examples 1 to 8, the volume fraction of the silicon metal in the ceramic porous body 4 was 18 vol % or more. It was confirmed from these results that the volume fraction of the silicon metal in the ceramic porous body 4 of 18 vol % or more allowed the increasing rate of resistance of the electrically heating support to be more reliably suppressed.

Looking at Examples 1 to 8 from a different perspective, it was found that the bulk density of the ceramic porous body 4 was 2.7 g/cm³ or less in Examples 1 to 8. It was confirmed from these results that the bulk density of the porous ceramic body 4 of 2.7 g/cm³ or less allowed the heating time to be more reliably reduced.

Particularly, in Example 7 in which the specific surface area was 0.155 m²/g, the increasing rate of resistance could be further suppressed to 1.44. Also, in Example 3 in which the specific surface area was 0.054 m²/g, the heating time could be further suppressed to 50 sec. It was confirmed from these results that the specific surface area of the ceramic porous body 4 of 0.05 m²/g or more and 0.16 m²/g or less as in Examples 3 to 7 allowed the increasing rate of resistance of the electrically heating support to be more reliably suppressed, and the heating time to be more reliably suppressed.

In Example 6 in which the specific surface area was 0.131 m²/g, the increasing rate of resistance could be further suppressed to 1.38. In Example 4 in which the specific surface area was 0.087 m²/g, the heating time could be further suppressed to 48 sec. It was confirmed from these results that the specific surface area of the ceramic porous body 4 of 0.08 m²/g or more and 0.14 m²/g or less as in Examples 4 to 6 allowed the increasing rate of resistance of the electrically heating support to be further reliably suppressed, and the heating time to be further reliably suppressed.

### Description of reference numerals

1: honeycomb structure
10: honeycomb structure portion
100: outer peripheral wall
101: partition wall
102: cell
2: electrode
4: ceramic porous body

## Claims

1. An electrically heating support, comprising:
a honeycomb structure including a honeycomb structure portion having an outer peripheral wall and a partition wall disposed on an inner side of the outer peripheral wall, the partition wall defining a plurality of cells each extending from one end face to other end face to form a flow path; and
a pair of electrodes for applying a voltage to the honeycomb structure,
wherein the outer peripheral wall and the partition wall are made of a ceramic porous body, and the ceramic porous body has a specific surface area of 0.01 m²/g or more and 0.20 m²/g or less.

2. The electrically heating support according to claim 1, wherein the ceramic porous body is a composite material of silicon metal and silicon carbide, and a volume ratio of the silicon metal in the ceramic porous body is 18 vol % or more.

3. The electrically heating support according to claim 1 or 2, wherein the ceramic porous body has a bulk density of 2.7 g/cm³ or less.

4. The electrically heating support according to any one of claims 1 to 3, wherein the specific surface area of the ceramic porous body is 0.05 m²/g or more and 0.16 m²/g or less.

5. The electrically heating support according to any one of claims 1 to 4, wherein the specific surface area of the ceramic porous body is 0.08 m²/g or more and 0.14 m²/g or less.
